# EUROPÄISCHE PATENTANMELDUNG

(11) **EP 1 734 743 A2**
(43) Veröffentlichungstag der Anmeldung: **20.12.2006**
(21) Anmeldenummer: 06012090.4
(22) Anmeldetag: 13.06.2006
(51) Int. Cl.: H04N 5/225

(54) **Träger für Sensorboards**

(30) Priorität: 16.06.2005 DE 102005027892; 24.05.2006 DE 102006024466
(71) Anmelder: Basler Aktiengesellschaft, 22926 Ahrensburg (DE)
(72) Erfinder: Brachmann, Ralf, 22926 Ahrensburg (DE); Dierks, Friedrich, 22926 Ahrensburg (DE); Schmidt, Michael, 22041 Hamburg (DE); Schomann, Björn, 23795 Bad Segeberg (DE)
(74) Vertreter: Jaeschke, Rainer

(57) **Zusammenfassung**

Die Erfindung betrifft einen Träger, mit dem ein Bauelement auf einer Platine in einem Gehäuse oder Gehäuseteil in einer definierten Lage gehalten wird. Insbesondere betrifft die Erfindung einen Träger für ein Sensorboard, auf dem ein lichtempfindlicher Sensor montiert ist. Gemäß der Erfindung wird vorgeschlagen, dass der Träger wenigstens eine mechanische Kodierung aufweist, die mit einer korrespondierenden mechanischen Kodierung an der Platine zusammenwirkt.

## Beschreibung

Die Erfindung betrifft einen Träger, mit dem ein Bauelement auf einer Platine in einem Gehäuse oder Gehäuseteil in einer definierten Lage gehalten wird. Insbesondere betrifft die Erfindung einen Träger für ein Sensorboard, auf dem ein lichtempfindlicher Sensor montiert ist. Das Sensorboard wird über den Träger in dem Gehäuse oder einem Gehäuseteil einer elektronischen Kamera gehalten. Es ist daher im Folgenden überwiegend von einem lichtempfindlichen Sensor und einer elektronischen Kamera die Rede, ohne dass damit eine Beschränkung verbunden sein soll. Schließlich betrifft die Erfindung auch ein Gehäuse oder ein Gehäuseteil für eine elektronische Kamera.

Elektronische lichtempfindliche Sensoren müssen in einer elektronischen Kamera relativ zur optischen Achse des Objektivs genau ausgerichtet werden. Die elektronischen Sensoren können dabei eine im Wesentlichen zeilenförmige Struktur für so genannte Zeilenkameras oder eine flächige Struktur für so genannte Matrixkameras aufweisen. In beiden Fällen ist es erforderlich, dass der Abstand zwischen dem Objektiv oder eines Objektivträgers und der lichtempfindlichen Oberfläche des Sensors, das so genannte Auflagemaß, exakt eingehalten wird. Damit insbesondere die lichtempfindliche Fläche eines Flächensensors möglichst vollständig ausgenutzt wird, ist es zudem erforderlich, den Sensor in einer Ebene senkrecht zur optischen Achse durch Drehen und/oder Verschieben auszurichten. Schließlich soll der Sensor exakt senkrecht zur optischen Achse verlaufen. Demnach muss der Sensor zur genauen Ausrichtung relativ zur optischen Achse oder zu entsprechenden Bezugskanten des ihn aufnehmenden Gehäuses oder Gehäuseteils der Kamera nicht nur in Richtung der drei Raumachsen verschiebbar sein, sondern muss auch um die drei Raumachsen verkippbar gehalten werden.

Für eine solche Beweglichkeit des Sensors müssen aufwändige mechanische Stellmittel in die Kamera integriert werden, um den Sensor exakt ausrichten zu können. Eine derartige Anordnung mit mechanischen Stellmitteln ist beispielsweise in der JP-A-60115904 beschrieben. Eine exakte Positionierung mit Hilfe dieser mechanischen Hilfsmittel bedarf einiger Geschicklichkeit und eines erhöhten Zeitaufwands, was im Rahmen einer Serienfertigung nicht immer möglich ist.

Eine andere Möglichkeit zur genauen Positionierung des Sensors im Gehäuse oder Gehäuseteil der Kamera stellt das Verkleben dar. Aus der EP 1 432 240 A1 ist es bekannt, einen Sensor in der exakten Lage mit einem Montagekörper zu verkleben. Der Montagekörper wird im Gehäuse oder Gehäuseteil der Kamera mittels bekannter mechanischer Fixiermittel gehalten. Eine abschließende Justierung des Sensors in der im Gehäuse eingebauten Lage ist nicht vorgesehen. Vielmehr wird davon ausgegangen, dass durch die exakte Positionierung des Sensors auf den Montagekörper und dessen Fertigungsgenauigkeit die gewünschte Genauigkeit erreicht wird.

Aus der US 2001/0010562 A1 ist es bekannt, den lichtempfindlichen Sensor mit einer Metallplatte zu verkleben. Die Ausrichtung des Sensors relativ zum Objektiv erfolgt über mechanische Stellmittel, die an der metallischen Platte angreifen.

Ein anderes Problem besteht darin, dass häufig in einem Gehäusetyp oder Gehäuseteiltyp unterschiedliche Sensoren montiert werden sollen. Durch eine solche modulartige Bauweise können eine Vielzahl unterschiedlicher elektronischer Kameras in wirtschaftlich günstiger Weise bereitgestellt werden. Allerdings besteht das Problem darin, dass die unterschiedlichen Sensoren in der Regel unterschiedliche Abmessungen, insbesondere verschiedene Bauhöhen, und zudem unterschiedliche Bauformen aufweisen, die sich insbesondere in der Art der Befestigung voneinander unterscheiden. Eine unmittelbare Montage des Sensors oder Sensorboards im Gehäuse oder Gehäuseteil in der vorbestimmten definierten Lage ist daher für verschiedene Sensoren nicht ohne Weiteres möglich ist.

Der Erfindung liegt daher die Aufgabe zugrunde, einen Träger der eingangs geschilderten Art so auszubilden, dass ein Sensorboard in einfacher Weise relativ zum Gehäuse oder Gehäuseteil in der vorbestimmten Lage montiert werden kann. Insbesondere soll erreicht werden, dass mit nur einem Träger unterschiedliche Sensorboards, die unterschiedliche Sensoren tragen, in gleicher Weise in ein Gehäuse oder Gehäuseteil passen.

Die Aufgabe wird gemäß der Erfindung dadurch gelöst, dass der Träger wenigstens eine mechanische Kodierung aufweist, die mit einer korrespondierenden mechanischen Kodierung an der Platine zusammenwirkt. Eine solche Anordnung hat den Vorteil, dass die den Sensor tragende Platine in einer vorbestimmten Position mit dem Träger verbunden werden kann, so dass der Sensor hierdurch bereits eine Vorausrichtung erfährt. Es ist anschließend nur noch erforderlich, den Träger innerhalb des Gehäuses oder Gehäuseteils so auszurichten, dass der Sensor die gewünschte definierte Endlage einnimmt.

Gemäß einer bevorzugten Ausführungsform der Erfindung ist vorgesehen, dass der Träger wenigstens zwei und vorzugsweise mehrere mechanische Kodierungen aufweist, die in eindeutiger Weise mit korrespondierenden mechanischen Kodierungen unterschiedlicher Platinen zusammenwirken. Hier wird der Vorteil der Erfindung besonders deutlich. Es kann vorgesehen werden, dass die Sensoren entsprechend ihrer Baugröße oder Bauform oder Einbaulage auf der Platine klassifiziert werden, so dass bestimmten Sensoren bestimmte mechanische Kodierungen der Platine zugeordnet werden. Dann ist es möglich, dass durch die Wahl der Platinen der betreffende Sensor bereits beim Montieren in den Träger eine Vorausrichtung erfährt, die der gewünschten definierten Endlage des Sensors im Gehäuse oder Gehäuseteil zumindest näherungsweise entspricht.

Vor allem können durch die mechanischen Codierungen unterschiedliche Höhen der Sensoren auf der Platine bereits bei der Montage am Träger weitestgehend ausgeglichen werden. Die Sensoroberfläche verläuft dann stets in einem in etwa gleichen Abstand zum Objektivträger. Der Träger braucht dann nur noch geringfügig relativ zum Gehäuse oder Gehäuseteil ausgerichtet zu werden.

Wie die mechanischen Kodierungen ausgebildet sind, ist grundsätzlich beliebig. Es ist jedoch zweckmäßig, dass die mechanischen Kodierungen durch ineinander greifende Vorsprünge, Aussparungen, Schlitze und/oder Laschen gebildet werden. Hiermit ist eine einfache und eindeutige Zuordnung möglich. Auch können derartige Vorsprünge und Aussparungen in einfacher Weise hergestellt werden.

Gemäß einer Ausführungsform der Erfindung ist vorgesehen, dass der Träger zwei gegenüber liegende Seitenelemente aufweist, die mit der mechanischen Kodierung versehen sind und zwischen denen die Platine gehalten ist. Insbesondere ist es günstig, wenn die Seitenelemente elastisch sind, um die Platine klemmend zu halten. Dadurch kann die Montage der Platine wesentlich vereinfacht werden, da durch die Klemmung die Platine bereits fixiert wird. Anschließend kann die Platine über zusätzliche Klemmmittel und/oder Rastmittel und/oder Befestigungsmittel mit dem Träger verbunden werden. Hierdurch wird eine kompakte Einheit bereitgestellt, bei der eine Relativbewegung zwischen Sensor und Träger nicht mehr auftritt. Es ist offensichtlich, dass dann nur noch der Träger relativ zum Gehäuse oder Gehäuseteil ausgerichtet zu werden braucht. Auch kann es von Vorteil sein, wenn die Seitenelemente bzw. die dortigen Kodierungen unterschiedlich gestaltet sind, um auf diese Weise eine Verdrehsicherung für die Platine zu erreichen. Auf diese Weise wird die Position der Platine eindeutig bestimmt.

Es ist günstig, wenn die Seitenelemente Durchbrechungen und/oder Schlitze und/oder Aussparungen aufweisen, in welche Vorsprünge, Stege und/oder Laschen der Platinen passen. In den Seitenelementen des Trägers können die Durchbrechungen und dergleichen in einfacher Weise hergestellt werden, während die Vorsprünge und dergleichen als Fortsätze der Platinen ebenfalls leicht herstellbar sind.

Gemäß einer weitergehenden Ausführungsform der Erfindung ist vorgesehen, dass der Träger wenigstens zwei und vorzugsweise drei, vier oder fünf Befestigungsvorsprünge aufweist, mit denen er im Gehäuse oder Gehäuseteil befestigt wird. Dadurch wird erreicht, dass die Ausrichtung des Trägers und dessen Befestigung nur noch über diese Befestigungsvorsprünge zu erfolgen brauchen.

Besonders zweckmäßig ist es, wenn der Träger mit einer Fixiermasse mit dem Gehäuse oder Gehäuseteil verklebt ist. Es kann hier vorgesehen werden, dass bei der Montage des Trägers der Sensor exakt zum Gehäuse oder Gehäuseteil gegenüber der optischen Achse ausgerichtet gehalten wird, bis die Fixiermasse, beispielsweise ein Kleber, der beispielsweise UV-aushärtbar ist, ausreichend ausgehärtet ist. Eine solche Fixiermasse erlaubt zum einen im fließfähigen Zustand ein exaktes Ausrichten des Trägers. Zum anderen wird nach dem Aushärten ein sicherer Halt in der gewünschten Endlage bewirkt. Aufgrund der Vorausrichtung des Sensors mittels der mechanischen Kodierungen an dem Träger und der Platine reichen geringe Verschiebungen des Trägers relativ zum Gehäuse oder Gehäuseteil aus, um die exakte definierte Endlage des Sensors zu bewirken. Der Kleber oder die Fixiermasse kann mit den Befestigungsvorsprüngen zusammenwirken, wodurch bereits der gewünschte feste Halt nach dem Aushärten erreicht wird.

Für die genaue Justierung kann der Sensor mit dem Träger relativ zum Gehäuse oder Gehäuseteil mittels wenigstens eines Manipulators bewegt werden, bis die gewünschte Lage des Sensors innerhalb der Toleranzgrenzen in dem Gehäuse oder Gehäuseteil erreicht ist, wobei der Sensor oder das Trägerteil mit dem Gehäuse oder dem Gehäuseteil mit einer Fixiermasse in dieser Lage fixiert wird. Der Manipulator, der motorisch oder manuell bedienbar sein kann, erlaubt eine exakte Positionierung, so dass der Sensor zunächst ohne feste Verbindung zum Gehäuse in der richtigen Lage relativ zu dem Gehäuse gehalten wird. Die Ausrichtung des Sensors mittels des Manipulators kann mit optischen Messgeräten während der Ausrichtung genau überprüft werden. Es können Steuerungen vorgesehen werden, die ein automatisches Ausrichten anhand der Messergebnisse ermöglichen.

Anschließend kann die Fixiermasse eingefügt werden, ohne dass sich die Lage des Sensors relativ zum Gehäuse verändert. Die Fixiermasse kann aber auch vor dem Ausrichten in das Gehäuse eingefügt oder am Sensor oder Träger vorhanden sein. Sie erlaubt vor dem Aushärten ein Ausrichten. Der Manipulator beziehungsweise dessen Greifstück kann entfernt werden, und der Sensor wird in dem Gehäuse oder Gehäuseteil der Kamera fest gehalten.

Der Manipulator kann am Träger oder Sensor angreifen. Es ist natürlich auch möglich, dass der Manipulator am Gehäuse angreift. Insbesondere kann vorgesehen werden, dass ein Manipulator am Träger oder Sensor und ein Manipulator am Gehäuse angreift. So kann es zweckmäßig sein, wenn der am Träger oder Sensor angreifende Manipulator rotatorische Bewegungen durchführt, während der am Gehäuse angreifende Manipulator translatorische Bewegungen durchfährt. Insgesamt lässt sich damit eine Bewegung des Sensors oder des Trägers relativ zum Gehäuse in allen sechs Freiheitsgraden bewirken.

Vorzugsweise erlaubt der Manipulator eine Bewegung des Sensors oder des Trägers relativ zum Gehäuse oder Gehäuseteil in allen drei Raumrichtungen. Auch ist es zweckmäßig, wenn der Manipulator eine Drehung des Sensors oder des Trägerteils relativ zum Gehäuse oder Gehäuseteil um alle drei Raumachsen erlaubt. Solche Manipulatoren sind allgemein bekannt und bedürfen daher an dieser Stelle keiner weiteren Erläuterungen.

Häufig ist das Kameragehäuse eine Hülse, an deren einem Ende die Aufnahme für das Objektiv vorhanden ist. Die bearbeitete Stirnkante bildet häufig die Bezugskante, an der beispielsweise das Auflagemaß, also der Abstand zwischen Objektiv und Sensor eingestellt wird. Die Bestückung des Kameragehäuses erfolgt in der Regel von der dieser Seite abgekehrten Rückseite, die nach der Montage mit einem Gehäusedeckel verschlossen werden kann.

Der Träger mit dem vormontierten Sensor kann demnach von der Rückseite mittels des Manipulators in das Kameragehäuse eingeführt werden. Das Kameragehäuse kann einen inneren Absatz aufweisen, der die ungefähre axiale Lage des Trägers definiert. Die Abmessungen des Trägers sind dabei so gewählt, dass dieses unter Belassung wenigstens eines Spaltes und vorzugsweise eines umlaufenden Spaltes in den das Träger aufnehmenden Gehäuseabschnitt passt. Dadurch kann der Träger nahezu beliebig innerhalb des Kameragehäuses zum Ausrichten des Sensors bewegt werden. Verarbeitungstoleranzen bei der Vormontage von Sensor und Träger können so ausgeglichen werden.

Der Manipulator, der manuell oder motorisch, beispielsweise durch elektrische Stellmotoren oder elektromagnetische, hydraulische oder pneumatische Motoren, betätigbar ist, kann nicht nur lineare Bewegungen in den drei Raumachsen x, y, z, sondern auch eine Verkippung um diese drei Raumachsen seines Greifstücks und des daran gehaltenen Trägers erlauben.

Damit kann der Sensor in den sechs Freiheitsgraden bewegt werden. In jedem Fall ist es möglich, dass der Sensor seine exakt definierte Lage relativ zur Bezugskante oder anderer Bezugsflächen oder -kanten oder -punkten einnehmen kann. In dieser Lage wird der Träger gehalten und die Spalte werden mit einer Fixiermasse verfüllt. Es kann vorgesehen werden, dass ein aushärtbarer Kleber eingefüllt wird und dass nach dem Aushärten des Klebers, beispielsweise nach UV-Lichtbestrahlung der Manipulator vom Träger getrennt wird. Der Sensor beziehungsweise der ihn tragende Träger wird durch den Kleber in der exakten Ausrichtung im Kameragehäuse gehalten.

Je nach Anforderungen an die Genauigkeit kann vorgesehen werden, dass der Sensor nur in der z-Achse entlang der optischen Achse des Objektivs verschoben wird, also der Abstand zum Objektiv eingestellt wird. Bei höherer geforderter Genauigkeit kann zudem eine Verkippung um die x- und/oder y-Achse und/oder eine Verschiebung in x- oder y-Richtung erfolgen. Schließlich kann vorgesehen werden, dass ergänzend eine Verschwenkung um die z-Achse erfolgt.

Das Greifstück des Manipulators kann den Sensor oder den Träger beispielsweise mittels Unterdruck halten. Auch können Klemmvorrichtungen vorgesehen werden, die ausreichen, den Sensor beziehungsweise den Träger auch während des Verfüllens der Fixiermasse festzuhalten.

Wie oder wo der Träger mit der Fixiermasse am Gehäuse oder Gehäuseteil verklebt wird, ist grundsätzlich beliebig. Es ist jedoch besonders zweckmäßig, wenn am Gehäuse oder Gehäuseteil Aufnahmen vorhanden sind, die so bemessen sind, dass der Träger und/oder die Befestigungsvorsprünge mit Spiel in Seitenrichtung und in Längsrichtung aufgenommen werden, wobei die Aufnahmen mit Fixiermasse zum Halten des Trägers und somit des Bauelements in der definierten Lage gefüllt sind. Die Fixiermasse kann vor oder nach dem Ausrichten in die Aufnahmen eingefüllt werden. Durch eine solche Anordnung wird erreicht, dass der Träger mit seinen Befestigungsvorsprüngen innerhalb der Aufnahmen, die mit der Fixiermasse gefüllt sind, bewegbar und somit relativ zum Gehäuse oder Gehäuseteil ausrichtbar ist. In der gewünschten Lage ist es dann lediglich erforderlich, den Träger relativ zum Gehäuse oder Gehäuseteil zu fixieren, bis die Fixiermasse ausgehärtet ist. Schließlich hat das Vorsehen solcher Aufnahmen den Vorteil, dass die Fixiermasse definiert in das Gehäuse eingeführt und bis zum Einsetzen des Trägers gehalten werden kann.

Das Spaltmaß kann weniger als 1 bis 5 mm betragen. Damit wird gewährleistet, dass ausreichend Fixiermasse zwischen Gehäuse oder Gehäuseteil und Sensor oder Träger vorhanden ist, um diesen fest zu halten. Auch erlaubt ein derart bemessener Spalt ein sicheres Einführen des Sensors beziehungsweise des Trägers in das Gehäuse mittels des Manipulators sowie die Durchführung der erforderlichen Bewegungen und Verkippungen während der genauen Ausrichtung.

Weiterhin ist es günstig, wenn die Befestigungsvorsprünge an ihren Enden, die in die Aufnahmen eintauchen, mit Hinterschneidungen, Nasen, Aussparungen oder Durchbrechungen versehen sind. Damit wird ein besonders inniger Verbund der Befestigungsvorsprünge mit der Fixiermasse und somit mit den Aufnahmen des Gehäuses oder Gehäuseteils erreicht. Eine stabile, verschiebungssichere Befestigung des Trägers und des Sensors relativ zum Gehäuse oder Gehäuseteil ist damit möglich.

Die Fixiermasse kann ein Kleber und vorzugsweise ein aushärtbarer Kleber sein, wobei der Sensor oder der Träger mit dem Gehäuse oder Gehäuseteil verklebt wird. Es sind aushärtbare Kleber bekannt, die nach dem Auftragen beziehungsweise Verfüllen ohne Schwund trocknen. Damit kann erreicht werden, dass der exakt positionierte Träger beziehungsweise der Sensor während des Aushärtens keine Verschiebungen und/oder Verkippungen erfährt. Vielmehr wird der Sensor beziehungsweise der Träger spannungsfrei im Gehäuse oder Gehäuseteil gehalten. Der Kleber kann beispielsweise ein unter UV-Licht aushärtbarer Kleber sein.

Alternativ kann vorgesehen werden, dass die Fixiermasse ein Lot ist, wobei der Sensor oder der Träger mit dem Gehäuse oder dem Gehäuseteil verlötet wird. Dies kann beispielsweise dann zweckmäßig sein, wenn der Träger und das Gehäuseteil aus verlötbaren Werkstoffen, insbesondere Metall bestehen. Mit dem Lot kann zudem ein guter Wärmeübergang zwischen Sensor oder Träger und dem Gehäuseteil bewirkt werden, wodurch eine gute Kühlung des Sensors erzielt werden kann.

Gemäß einer bevorzugten Ausführungsform der Erfindung weist der Träger eine im Wesentlichen H-förmige Gestalt auf, bei welcher die beiden Schenkel auf der einen Seite der Basis die Seitenelemente bilden und auf der gegenüber liegenden Seite die Vorsprünge aufweisen. Dabei ist es günstig, wenn die Basis im mittleren Bereich eine Durchbrechung aufweist. Durch eine solche Ausbildung des Trägers ist es möglich, dass die Platine mit den Sensorboard von der einen Seite des Trägers mit diesem befestigt wird derart, dass das Gesichtsfeld des Sensors auf die Basis gerichtet wird. In der montierten Lage verläuft die optische Achse demnach durch die Durchbrechung im mittleren Bereich der Basis. Die Rückseite der Platine bleibt frei zugänglich.

Weiterhin ermöglicht eine solche Anordnung ein besonders leichtes Einführen des Trägers in das Gehäuse oder Gehäuseteil der Kamera. Häufig weist dieses eine-in etwa zylindrische Gestalt auf, an deren einen Stirnseite der Objektivträger mit dem Bezugspunkt oder der Bezugsfläche oder -ebene angeordnet ist. Eine Montage von dieser Seite ist in der Regel nicht möglich. Vielmehr erfolgt das Einführen des Trägers von der dem Objektivträger abgekehrten Seite. Da nunmehr die Befestigungsvorsprünge auf der der Rückseite der Platine abgekehrten Seite angeordnet sind, kann der Träger in einfacher Weise von der dem Objektivträger abgekehrten Seite in das hülsenförmige Gehäuse oder Gehäuseteil eingeführt werden. Dieses kann dort entsprechende Aufnahmen aufweisen, in die die Befestigungsvorsprünge eintauchen.

Im Einzelnen kann die Anordnung so getroffen sein, dass die Befestigungsvorsprünge parallel oder im Wesentlichen parallel zur Einführrichtung ausgerichtet sind, während die Aufnahmen als parallel zur Einführrichtung verlaufende Bohrungen oder Vertiefungen ausgebildet sind. Diese Vertiefungen werden mit der Fixiermasse gefüllt, in die die Befestigungsvorsprünge dann eintauchen. Ein sicherer Halt wird damit gewährleistet.

Es ist zweckmäßig, wenn der Träger aus einem Metallblech besteht. Ein solches Metallblech weist zum einen die gewünschte mechanische Festigkeit auf. Zum anderen ist Metall ein guter Wärmeleiter, so dass die Betriebswärme des Sensors über den Träger gut abgeführt werden kann.

Es ist weiterhin günstig, wenn der Träger aus dem Metallblech gefertigt ist und die Seitenelemente und/oder die Vorsprünge und/oder die Schenkel durch Aufbiegen gebildet werden. Die Fertigung des Metallblechs kann z. B. durch Stanzen, Laserstrahlschneiden, Wasserstrahlschneiden, Fräsen, Erodieren usw. mit hinreichender Genauigkeit erfolgen. Durch das Aufbiegen der Seitenelemente entsteht eine Geometrie, durch die die Platine klemmend zwischen den Seitenelementen gehalten wird. Auch können durch das Stanzen die Durchbrechungen oder Schlitze, die in der aufgebogenen Lage die mechanischen Kodierungen bilden, in gleicher Weise durch z. B. Stanzen, Laserschneiden, Erodieren hergestellt werden.

Die Platine kann nach dem Einsetzen durch Fixiermittel fest mit dem Träger verbunden werden. Als Fixiermittel können Klemmbleche oder aber auch Kleber oder Lot eingesetzt werden. Dann bilden Sensor, Platine und Träger eine Einheit, die anschließend in das Gehäuse oder Gehäuseteil eingesetzt und dort ausgerichtet werden kann.

Mit einem solchen Träger ist es möglich, unterschiedliche Sensoren auf unterschiedlichen Platinen in gleicher Weise in ein Gehäuse oder ein Gehäuseteil einer elektronischen Kamera zu montieren. Dabei können der Träger einerseits und das Gehäuse oder Gehäuseteil andererseits stets gleich ausgebildet sein. Es ist lediglich erforderlich, den jeweiligen Sensoren Platinen mit den passenden Kodierungen zuzuordnen, damit bei der Montage der Platine am Träger der Sensor bereits die gewünschte Vorausrichtung erfährt. Dabei kann vorgesehen werden, dass die Platine nur in einer Montagelage und insbesondere nur einer Montagehöhe am Träger montierbar ist. Selbstverständlich ist es auch möglich, dass die Platine in mehreren Lagen am Träger montierbar ist.

Die exakte Ausrichtung des Sensors relativ zum Objektiv oder Objektivträger kann dann mittels des Trägers erfolgen, der nur noch um geringfügig verschiebbar in das Gehäuse oder Gehäuseteil passen muss. Hier reicht dann eine aushärtbare Fixiermasse aus, um den Träger in der gewünschten Position und mit der gewünschten Festigkeit zu halten.

Insgesamt wird ein modulartiger Aufbau einer elektronischen Kamera erreicht, der es erlaubt, verschiedene Sensoren in einem Typ Kameragehäuse unterzubringen. Die Herstellung wird wesentlich vereinfacht. Insbesondere ist es möglich, das Sensorboard, also den Sensor und die Platine, elektrisch vorzufertigen und mit dem Träger zu verbinden. Das dadurch entstehende Sensormodul kann dann außerhalb des Gehäuses vollständig gefertigt und beispielsweise auf Funktionsfähigkeit getestet werden. Im Anschluss erfolgt das Einsetzen in das Gehäuse oder das Gehäuseteil, die Ausrichtung gegenüber dem Gehäuse oder Gehaüseteil und schließlich die Fixierung.

Im Folgenden wird die Erfindung anhand der schematischen Zeichnung näher erläutert. Es zeigen:

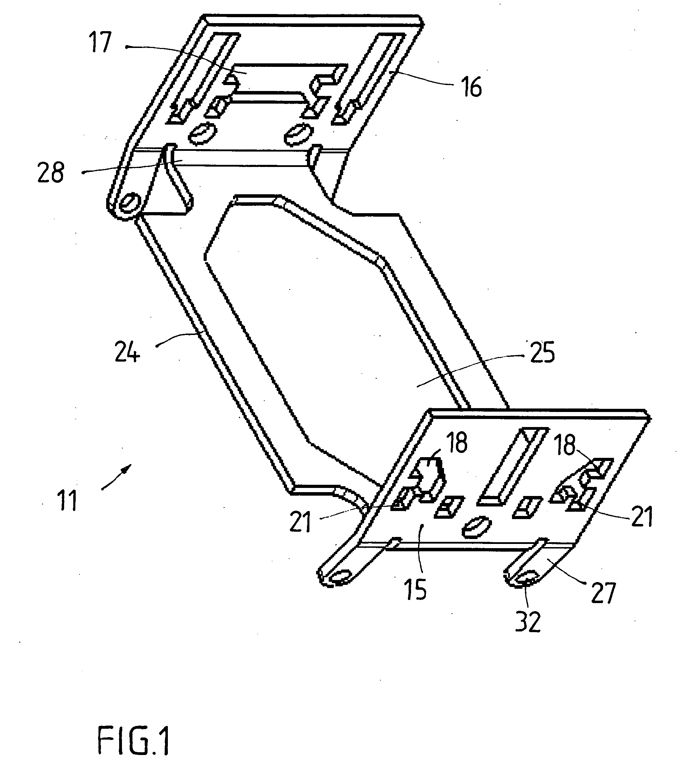

- Fig. 1: einen Träger in perspektivischer Darstellung gemäß der Erfindung,

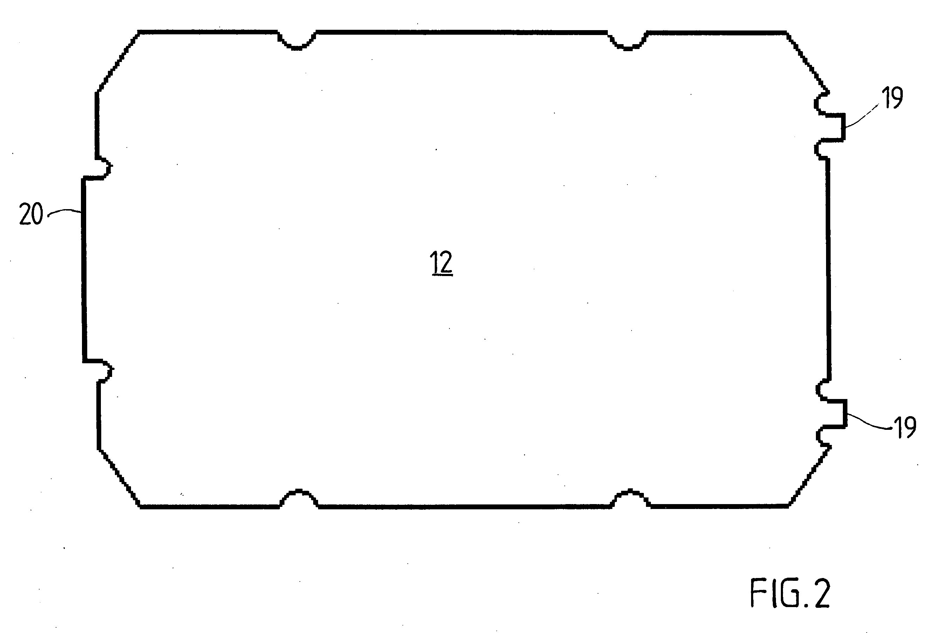

- Fig. 2: die Draufsicht auf eine unbestückte Platine und

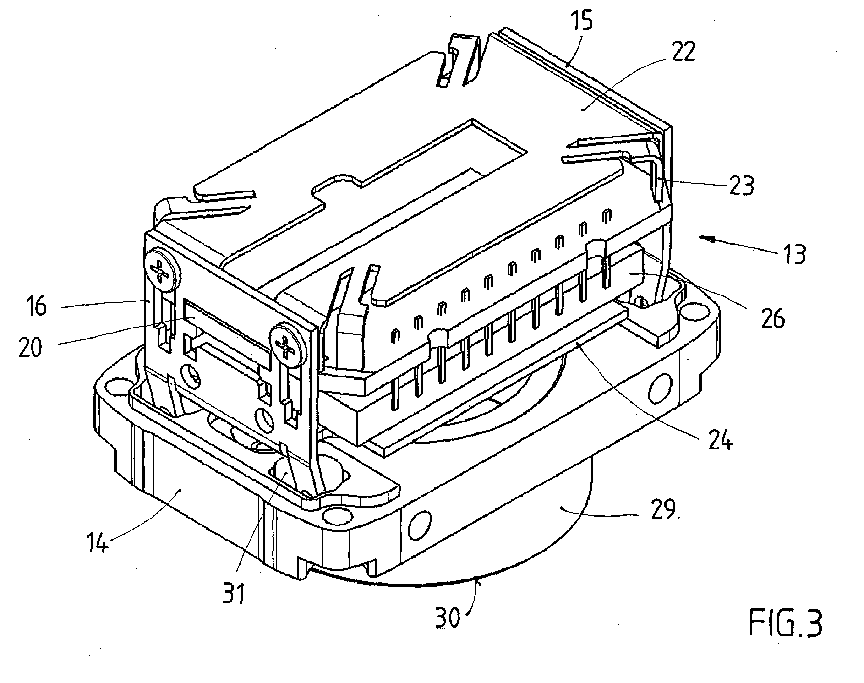

- Fig. 3: in perspektivischer Darstellung ein Sensormodul in montierter Lage.

Der in der Zeichnung dargestellte Träger 11 zum Halten einer Platine 12 und insbesondere eines Sensorboards 13 in oder an einem Gehäuse oder Gehäuseteil 14 einer elektronischen Kamera weist zwei Seitenelemente 15, 16 auf, zwischen denen die Platine 12 gehalten wird. Die Seitenelemente 15, 16 weisen eine Vielzahl von mechanischen Kodierungen auf, die durch Schlitze und/oder Aussparungen, beispielsweise durch einen Querschlitz 17 in dem Seitenelement 16 und zwei auf einer Höhe liegenden Durchbrechungen 18 in dem Seitenelement 15, gebildet werden. Diese mechanischen Kodierungen dienen zur Aufnahme der Platine 12, die mit einer korrespondierenden mechanischen Kodierung versehen ist.

Im Einzelnen ist die Anordnung so getroffen, dass die Platine 12 bei dem in der Zeichnung dargestellten Ausführungsbeispiel als mechanische Kodierung zwei Vorsprünge 19 auf ihrer in der Zeichnung rechten Seite aufweist, die in die Aussparungen 18 des Seitenelements 15 eingreifen können. Auf ihrer in der Zeichnung linken Seite weist die Platine 12 eine Lasche 20 auf, die in den Schlitz 17 des Seitenelements 16 passt. Es ist offensichtlich, dass die Platine 12 nur in einer Lage in den Träger 11 passt, nämlich wenn die Lasche 20 in den Schlitz 17 und die Vorsprünge 19 in die Aussparungen 18 eingreifen.

Die auf den Seitenelementen zusammengehörenden Aussparungen oder Schlitze, die zu korrespondierenden Vorsprüngen oder Laschen der Platine gehören, liegen in einer Ebene, die in der eingebauten Lage im Wesentlichen parallel zum Objektivträger beziehungsweise zu dessen Bezugsfläche und somit in etwa senkrecht zur optischen Achse der Kamera verläuft. In der korrekt eingesetzten Lage verläuft die Platine, der Sensor und somit auch die lichtempfindliche Oberfläche des Sensors ebenfalls im Wesentlichen parallel zum Objektivträger beziehungsweise zu dessen Bezugsfläche und somit in etwa senkrecht zur optischen Achse der Kamera.

Auch wenn die Vorsprünge 19 beispielsweise in die darunter liegenden Aussparungen 21 eingreifen könnten, passt die Lasche 20 dann nicht in einen korrespondierenden Schlitz in dem gegenüberliegenden Seitenelement 16. Sofern die Platine 12 gleichwohl derart eingesetzt wird, dass die Vorsprünge 19 in die Aussparungen 21 und die Lasche 20 in den Schlitz 17 eingreift, wird eine Schieflage bewirkt, die unmittelbar als Fehlmontage erkannt wird.

Für andere Platinen, die mit anderen Sensoren insbesondere anderer Höhe bestückt sind, können andere mechanische Codierungen des Trägers verwendet werden. Die ansonsten gleichartige Platine braucht lediglich mit einer korrespondierenden Codierung versehen zu sein derart, dass die Platine nur in der einen gewünschten Lage oder Höhe in einer Ebene in den Träger eingesetzt werden kann, die im wesentlichen parallel zum Objektivträger beziehungsweise zu dessen Bezugsfläche und somit in etwa senkrecht zur optischen Achse der Kamera verläuft.

Der Träger 11 kann aus einem elastischen Material, und insbesondere aus einem Stahlblech bestehen, wobei die Seitenelemente 15, 16 durch Aufbiegen eines zunächst planen Stahlblechs gebildet werden. Das Stahlblech kann z. B. durch Stanzen, Laser- oder Wasserstrahlschneiden, Erodieren, Fräsen gefertigt werden. Dadurch wird vor allem erreicht, dass die Seitenelemente 15, 16 eine gewisse Elastizität aufweisen, so dass diese zum Einführen der Platine 12 leicht aufgebogen werden können, damit die Vorsprünge und Laschen in die korrespondierenden Aussparungen und Schlitze einrasten können. Beim Freigeben der Seitenelemente wird damit ein gewisser Halt der Platine am Träger 11 erreicht. Der feste Halt wird durch ein Montageblech 22 bewirkt, das am Träger befestigt wird. Über die Federbeine 23 wird eine feste Klemmung der Platine beziehungsweise des fertig bestückten Sensorboards 13 auch im Falle von Temperaturausdehnungen erreicht. Neben Stahlblech können auch andere Materialien für den Träger 11 und das Montageblech 22 verwendet werden, u.a. Kunststoff, Keramik, Gussmetall usw.

Die Seitenelemente 15, 16 des Trägers werden durch ein Mittelteil 24 miteinander verbunden, das in seinem mittleren Bereich eine Durchbrechung 25 aufweist. In diesem mittleren Bereich 25 liegt das Gesichtsfeld des auf der Platine 12 montierten Sensors 26. Die Durchbrechung 25 ist vorzugsweise etwas größer als die lichtempfindliche Fläche des eingesetzten Sensors. Damit wird das Gesichtsfeld des Sensors vollständig ausgeschöpft.

Die Seitenelemente 15, 16 weisen ferner Befestigungsvorsprünge 27 auf, mit denen der Träger 11 am Gehäuse oder Gehäuseteil 14 fixiert werden kann. Im Einzelnen ist die Anordnung so getroffen, dass die Befestigungsvorsprünge 27 beim Aufbiegen der Seitenelemente 15, 16 um den Biegebereich 28 mitgebildet werden derart, dass sie sich auf der den Seitenelementen 15, 16 abgekehrten Seite des Mittelteils 24 befinden. Es wird eine im Wesentlichen H-förmige Struktur gebildet, deren Schenkel die Seitenelemente mit den Befestigungsvorsprüngen sind, während das Mittelteil 24 die Basis bildet.

Das Gehäuseteil 14 weist den Objektivträger 29 auf, zu welchem der Sensor 26 beziehungsweise dessen lichtempfindliche Oberfläche exakt ausgerichtet werden muss. Die Ausrichtung betrifft nicht nur den Abstand zur Bezugsebene 30 des Objektivträgers 29, sondern auch eine Verschiebung in einer Ebene parallel zur Bezugsebene 30 als auch eine Verkippung um die drei Raumachsen. Der mit dem Sensorboard 13 bestückte Träger 11 wird über seine Befestigungsvorsprünge 27 in korrespondierenden Aufnahmen 31 des Gehäuseteils 14 gehalten. Im Einzelnen ist die Anordnung so getroffen, dass die Aufnahmen 31 als napf-oder topfförmige Vertiefungen ausgebildet sind, in welche die Befestigungsvorsprünge 27 eintauchen. Der Träger ist somit zunächst mit Spiel frei beweglich in den Aufnahmen 31 gelagert.

Zum Ausrichten und Fixieren des Trägers relativ zum Gehäuseteil 14 beziehungsweise zum Objektivträger 29 ist vorgesehen, dass die Aufnahmen 31 mit einer Fixiermasse gefüllt werden. Anschließend wird der Träger 11 beziehungsweise der Sensor 26 exakt ausgerichtet und in dieser Position gehalten, bis die Fixiermasse in den Aufnahmen um die Befestigungsvorsprünge 27 herum ausgehärtet ist. Es kann beispielsweise ein UVaushärtbarer Kleber eingefüllt werden. Die Befestigungsvorsprünge 27 können an ihren in den Aufnahmen 31 eintauchenden Enden mit Durchbrechungen oder Vertiefungen 32 versehen sein, in die die noch fließfähige Fixiermasse eindringt und dort unter Bildung einer Hinterschneidung aushärtet. Damit wird ein besonders fester Halt des Trägers 11 am Gehäuseteil 14 bewirkt.

Mit einer solchen Anordnung ist es möglich, verschiedene Sensoren in gleichartiger Weise mit einem gleichartig ausgebildeten Gehäuseteil 14 zu verbinden. Durch die mechanischen Kodierungen am Träger 11 werden verschieden kodierte Platinen in jeweils einer eindeutigen, nur der betreffenden Platine zugeordneten Lage gehalten. Insbesondere werden durch die mechanische Kodierung eine eindeutige Montagerichtung der Platine und somit des Sensors 26 einerseits und eine eindeutige Montagehöhe der Platine und somit des Sensors relativ zum Mittelteil 24 und somit in der Endlage relativ zur Bezugsebene 30 des Objektivträgers 29 andererseits erreicht. Damit ist es möglich, unterschiedlich hohe Sensoren mit nur einem Typ Träger in einer Lage zu halten, die bereits näherungsweise der gewünschten Endlage in der Kamera entspricht. Es ist dann nur noch erforderlich, den bestückten Träger 11 mit seinen Vorsprüngen 27 in den Aufnahmen 31 auszurichten. Es ist offensichtlich, dass hierfür nur geringe Verschiebungen erforderlich sind, die durch die Fixiermasse gut überbrückt werden können.

Es wird ein modulartiger Aufbau einer Kamera bereitgestellt, die mit wenigen unterschiedlich ausgebildeten Elementen eine Vielzahl von Anwendungsmöglichkeiten und insbesondere eine Vielzahl von verschiedenartiger Sensoren aufweisen kann.

## Patentansprüche

1. Träger, mit dem ein Bauelement auf einer Platine (12) in einem Gehäuse oder Gehäuseteil (14) in einer definierten Lage gehalten wird, **dadurch gekennzeichnet, dass** der Träger (11) wenigstens eine mechanische Codierung (17, 18) aufweist, die mit einer korrespondierenden mechanischen Codierung (20, 19) an der Platine zusammenwirkt.

2. Träger nach Anspruch 1, **dadurch gekennzeichnet, dass** der Träger (11) wenigstens zwei und vorzugsweise mehrere unterschiedliche mechanische Codierungen aufweist, die in eindeutiger Weise mit korrespondierenden mechanischen Codierungen unterschiedlicher Platinen zusammenwirken.

3. Träger nach einem der Ansprüche 1 oder 2, **dadurch gekennzeichnet, dass** die mechanischen Codierungen durch ineinander greifende Vorsprünge (19), Aussparungen (18, 21), Schlitze (17) und/oder Laschen (20) gebildet werden.

4. Träger nach einem der Ansprüche 1 bis 3, **gekennzeichnet durch** zwei gegenüberliegende Seitenelemente (15, 16), die mit der mechanischen Codierung versehen sind und zwischen denen die Platine (12) gehalten ist.

5. Träger nach einem der Ansprüche 1 bis 4, **dadurch gekennzeichnet, dass** die Seitenelemente (15, 16) elastisch sind, um die Platine klemmend zu halten.

6. Träger nach einem der Ansprüche 3 bis 5, **dadurch gekennzeichnet, dass** die Seitenelemente Durchbrechungen (18, 21) und/oder Schlitze (17) und/oder Aussparungen aufweisen, in welche Vorsprünge (19), Stege und/oder Laschen (20) der Platinen passen.

7. Träger nach einem der Ansprüche 1 bis 6, **gekennzeichnet durch** wenigstens zwei und vorzugsweise drei, vier oder fünf Befestigungsvorsprünge (27), mit denen der Träger im Gehäuse oder Gehäuseteil befestigt wird.

8. Träger nach einem der Ansprüche 1 bis 7, **dadurch gekennzeichnet, dass** er mit einer Fixiermasse mit dem Gehäuse oder Gehäuseteil verklebt ist.

9. Träger nach einem der Ansprüche 7 oder 8, **dadurch gekennzeichnet, dass** am Gehäuse oder Gehäuseteil (14) Aufnahmen (31) vorhanden sind, die so bemessen sind, dass die Befestigungsvorsprünge (27) mit Spiel in Seitenrichtung und in Längsrichtung aufgenommen werden, und dass die Aufnahmen mit Fixiermasse zum Halten des Trägers und somit des Bauelements in der definierten Lage gefüllt sind.

10. Träger nach Anspruch 9, **dadurch gekennzeichnet, dass** die Befestigungsvorsprünge (27) an ihren Enden, die in die Aufnahmen eintauchen, mit Hinterschneidungen, Nasen, Aussparungen oder Durchbrechungen (32) versehen sind.

11. Träger nach einem der Ansprüche 1 bis 10, **dadurch gekennzeichnet, dass** die Platine (12) über zusätzliche Klemmmittel (22, 23) und/oder Rastmittel und/oder Befestigungsmittel mit dem Träger (11) verbunden ist.

12. Träger nach einem der Ansprüche 1 bis 11, **gekennzeichnet durch** eine im wesentlichen H-förmige Gestalt, bei welcher die beiden Schenkel auf der einen Seite der Basis die Seitenelemente (15, 16) bilden und auf der gegenüberliegenden Seite die Vorsprünge (27) aufweisen.

13. Träger nach einem der Ansprüche 12, **dadurch gekennzeichnet, dass** die Basis (24) im mittleren Bereich eine Durchbrechung (25) aufweist.

14. Träger nach einem der Ansprüche 1 bis 13. **dadurch gekennzeichnet, dass** er aus einem Metallblech besteht.

15. Träger nach Anspruch 14, **dadurch gekennzeichnet, dass** er aus dem Metallblech gefertigt ist und die Seitenelemente und/oder die Vorsprünge und/oder die Schenkel durch Aufbiegen gebildet werden.

16. Träger nach Anspruch 1 und/oder Anspruch 2, **dadurch gekennzeichnet, dass** jede Platine nur in einer Montagelage am Träger montierbar ist.

17. Gehäuse oder Gehäuseteil für eine elektronische Kamera, in der der lichtempfindliche Sensor (26) in einer definierten Lage relativ zum Objektiv oder Objektivträger (29) gehalten ist, **dadurch gekennzeichnet, dass** der lichtempfindliche Sensor (26) auf einer Platine (12) und einem Träger (11) gemäß einem oder mehreren der vorhergehenden Ansprüche in dem Gehäuse oder dem Gehäuseteil (14) gehalten ist.

18. Gehäuse oder Gehäuseteil nach Anspruch 17, **dadurch gekennzeichnet, dass** zur Aufnahme unterschiedlich großer Sensoren diese auf unterschiedlich mechanisch codierten Platinen angeordnet sind derart, dass die Sensoren jeweils am Träger in nur einer ihnen zugeordneten Montagelage gehalten sind, die bei in das Gehäuse oder Gehäuseteil eingesetztem Träger der vorbestimmten definierten Lage des Sensors relativ zum Objektiv oder Objektivträger zumindest näherungsweise entspricht, und dass das Trägerteil relativ zum Gehäuse oder Gehäuseteil ausrichtbar und fixierbar ist, um den Sensor in der exakten vorbestimmten definierten Lage relativ zum Objektiv oder Objektivträger zu halten.
